# EUROPEAN PATENT SPECIFICATION

(11) **EP 2 539 185 B1**
(45) Date of publication and mention of the grant of the patent: **07.05.2014**
(21) Application number: 11711641.8
(22) Date of filing: 21.02.2011
(51) Int. Cl.: B60R 21/213

(54) **PROTECTION SYSTEM FOR PASSENGERS OF HEAVY OR MEDIUM HEAVY TRANSPORT MEANS**
SCHUTZSYSTEM FÜR PASSAGIERE VON SCHWERLAST- ODER MITTELSCHWERLAST-TRANSPORTFAHRZEUGEN
SYSTÈME DE PROTECTION POUR PASSAGERS D'UN MOYEN DE TRANSPORT ROUTIER OU MI-LOURD

(30) Priority: 25.02.2010 IT MI20100301
(43) Date of publication of application: 02.01.2013
(73) Proprietor: New Poli Group S.r.l., 25018 Montichiari (BS) (IT)
(72) Inventor: POLI, Alessandro, I- 25018 Montichiari (BS) (IT)
(74) Representative: Marietti, Giuseppe
(86) International application number: PCT/IB2011/000338
(87) International publication number: WO 2011/110909

(56) References cited:
- EP-A2- 1 052 152
- US-A1- 2009 079 172
- US-A1- 2009 096 192

## Description

### FIELD OF THE INVENTION

The present invention relates to a system for side impact protection for occupants of heavy and medium - heavy transport means designed to carry passengers, of which may be mentioned, merely by way of example, coaches, buses, minibuses, trains, etc...

### KNOWN PREVIOUS ART

There are devices of the known art, such as conventional airbags, adapted to provide a protection against impacts, also very dangerous if not fatal, for the occupants of transport means such as cars. Unfortunately to date these devices, on heavy and medium - heavy passenger transport means, are not of great use which is found in the latest generation of light transport means such as, for example, common cars, although one could imagine heavy and medium - heavy transport means are equipped too.

Among the devices of the known art, there are some adapted to protect only the driver of the heavy transport means such as, for example, that reported in EP1052152A2, but not offering protection to passengers, or, alternatively, the device described in US2009096192A1, wherein there an airbag is assembled in the passenger seats, to offer protection against side impacts.

However the device object of US2009096192A1 involves the use of specially designed seats to accommodate the airbag of which they are provided with.

The adoption of such a device therefore requires a considerable expense, as it involves the replacement of all or part of the side seats of the heavy transport means.

It has also to be noticed that common airbags, in assembling solutions of the known art, are usually housed in proper areas obtained in the structure of the transport means in which they are assembled.

As it could be easily realized, these housings must be provided during the design of the means themselves, or the seat as in the above mentioned case.

It may be also realized that if the airbag should be assembled on means whose design does not foresee a place for it, this operation would be very complicated and expensive.

Indeed, in the project step it would incur in a complex and expensive study, adapted to obtain the necessary spaces in a structure not originally designed and sized to accommodate them. The inevitable costs for realizing the studied changes are then added to the design costs. The implementation of the afore said changes and adjustments, in its turn, implies additional costs due to lack of use and / or gain following the immobilization of the heavy transport means when changes are made. To the afore mentioned heavy costs are also added those incurring as a result of bureaucratic procedures, sometimes long, complicated and costly made by the competent authorities, for reviewing and approving the changes.

Therefore if the heavy costs for installing such devices on heavy and medium - heavy transport means are considered, it can be realized why, until now, they have not obtained the same diffusion that can be noticed in light transport means, although such devices are essential for safety of their occupants.

Ultimately, because of the lack of airbags on heavy and medium - heavy passenger transport means, they are not suitable, as compared to cars of the last generation, to provide an appropriate level of protection against side impacts due to collisions with means having similar mass or possible rollovers.

Indeed, in case of rollover, even at modest speeds, for the passengers of a heavy transport means the fall is much more dangerous than it is in common cars because they are almost never provided with appropriate retaining means, such as safety belts, required by law in cars, and such a fall happening from a raised position.

If we consider that this increased level of risk has to be added, as mentioned, to a reduction of passive safety means such as airbags, it could be easily understood how much a side impact can be dangerous if suffered on board of a heavy transport means.

Among the various risks associated with heavy and medium - heavy passenger transport means, partly because of the lack of airbags, those related to the probability of the passenger to be thrown out of the means accommodating him, because of the breaking of unprotected windows, must not be forgotten.

US 2009/0079172 A1 discloses a protecting system for occupants of heavy and medium - heavy transport means according to the preamble of claim 1.

### OBJECTS OF THE INVENTION

It is therefore an object of the present invention to obtain a system for protecting the occupants of heavy and medium - heavy passenger transport means able to provide protection against side impacts, but not forcing to deal with the costs, often prohibitive, and the realizing difficulties, which have stopped until now the diffusion of important safety means such the airbags. According to this invention the defined objects go too far, making possible the assembly of a system of airbags on the ordinary heavy and medium - heavy passenger transport means without involving structural changes to the means they are intended for.

### SUMMARY OF THE INVENTION

These objects are obtained according to the present invention by a protecting system for occupants of heavy and medium - heavy passenger transport means as defined in the first independent claim and in the subsequent dependent claims. This system is composed of a frame able to constrain an airbag to the structure of a heavy transport means, either directly or indirectly, through accessory structures assembled thereon, as well as being able to accommodate some or all components composing the airbag that, lying outside the present treatise, will not be treated in detail.

Such a system, based on a special frame, could be assembled on a heavy passenger transport means of any type, without making any structural changes to it. This feature allows to avoid designing changes to the heavy transport means so that it can accommodate a possible airbag system, changes that at worst could affect the structure of the heavy transport means, and therefore its mechanical properties. These and other design operations, thanks to the present invention, are avoided with consequent benefits in terms of both time and costs.

Another advantage of using the present invention consists of a very limited time for its installation, which by its nature is comparable to the assembly of a simple window with the addition of the operation of connecting the wirings and / or power of the airbag using the structures and wirings that are normally already associated with each airbag.

These times, as easily expected, are much lower than those required to make substantial changes to the vehicle, to which the assembly of the airbag system to be installed still would follow.

Finally, other benefits are also being able to avoid the bureaucratic procedures for approval the changes to be made to the structure of the heavy transport means, because it is unaffected by the assembling of the frame forming the main part of the present invention.

### BRIEF DESCRIPTION OF THE FIGURES

For purposes of illustrations only, and thereby absolutely not limitative, an embodiment of the safety device according to the present invention will be described, with reference to the accompanying drawings, in which:
Fig.1: is a schematic perspective view of a heavy transport means equipped with the protecting system for the occupants according to the invention.
Fig. 2: is a schematic section view of the protecting system for the occupants in case of fixed window.
Fig. 3: is a schematic section view of the protecting system for the occupants in case of window provided with adjustable openings.

### DETAILED DESCRIPTION OF THE PREFERRED EMBODIMENT

Referring to the afore mentioned figures, the protecting system for the occupants of heavy and medium - heavy passenger transport means, according to the present invention, generically indicated with T, comprises a frame 21 constraining at the same time the glass 25 of the window, the edge 26 of the generic opening 111 of the window obtained on the heavy transport means 110, as well as an airbag, of which only the protecting inflatable bag 22 is represented.

The frame 21, in the simplest case of a fixed window 112 without adjustable openings, comprises peripheral portions 13, 14, 18, 19, that are constrained to the edge 26 of the window opening, of which they follow the profile at least approximately.

For example, on the contrary in case wherein the window 111 also provides an adjustable opening, the frame, in addition to peripheral portions 11, 15, 16, 17, may comprise at least one further additional transversal portion 12 for assembling the device controlling the opening of the window.

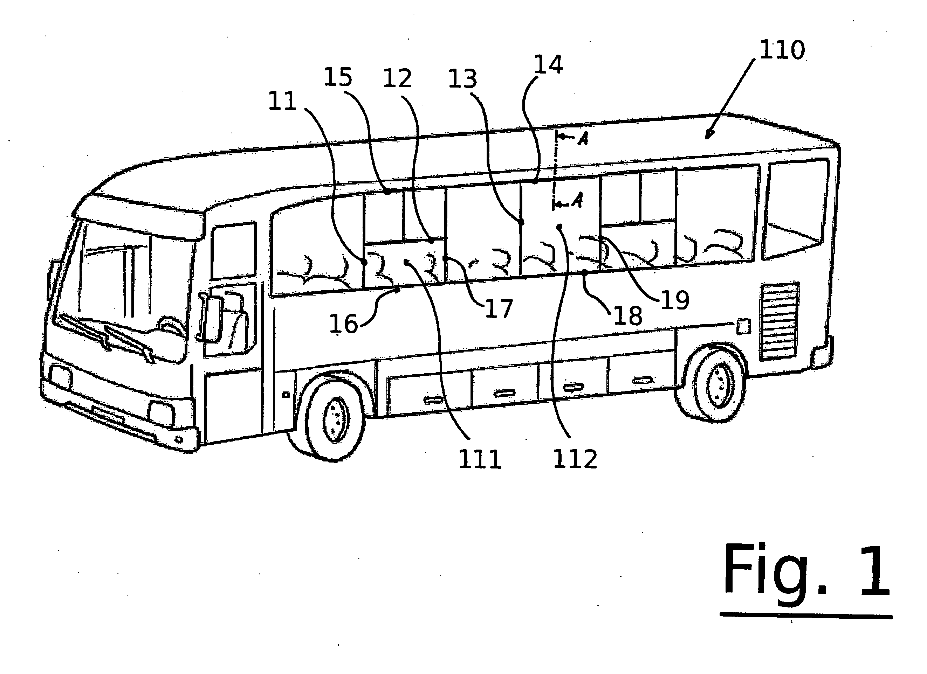

Such a further transversal portion may also be used to assemble the protecting bag of the assembled airbag and / or part or all of its components and may have any shape and profile, both vertically and horizontally. For example, although not limited to, in the embodiment shown in Figure 1, the transversal portion 12 is, arbitrarily, only one and has a horizontal profile.

In alternative implementations, as well as having one or more of the afore said possible additional transversal portions 12, a frame 21 can be adopted of the type that could be disassembled with the purpose, for example, of facilitating the assembling thereof on a heavy transport means 110, and / or facilitating the airbag assembly on the frame, and / or at least the possible glass 25 of the window.

The protecting inflatable bag 22 is preferably assembled in a transversal portion of the frame 21, having approximately a horizontal profile, so as to provide a path, during its inflation, from on high downwards.

In alternative embodiments a different assembling solution of the afore said protecting inflatable bag 22 is not excluded and / or of its motion during the inflation thanks to appropriate devices not represented, the latter being outside the objects of the present treatise, and being integral part of the airbags of the known art.

The various airbag components can be assembled both on different portions of the frame 21, and on a single portion of it.

In one of the possible embodiments, in addition to the assembly of the protecting inflatable bag 22 on a transversal horizontal portion of the frame 21, devices inflating the afore said bag 22 could be assembled on an adjacent vertical portion.

The fluidic connection between the afore said protecting inflatable bag 22 and the inflating devices, composed of at least one gas generator and / or container, is obtained by appropriate means not shown, which may consist of pipes of different kinds.

The airbag control system and the corresponding wirings, not represented, may be assembled in arbitrary portions of the frame too.

The protecting system object of the present invention could also use, in alternative embodiments, external components such as high pressure hydraulic pumps, and / or feeding devices, and / or external controlling means being able to adjust, for example, the operating and / or intervention logic of the safety device.

In the preferred embodiment, the airbag components are all constrained to the frame 21 of the described protecting system that, by an appropriate wiring not represented, is fed by an external power source.

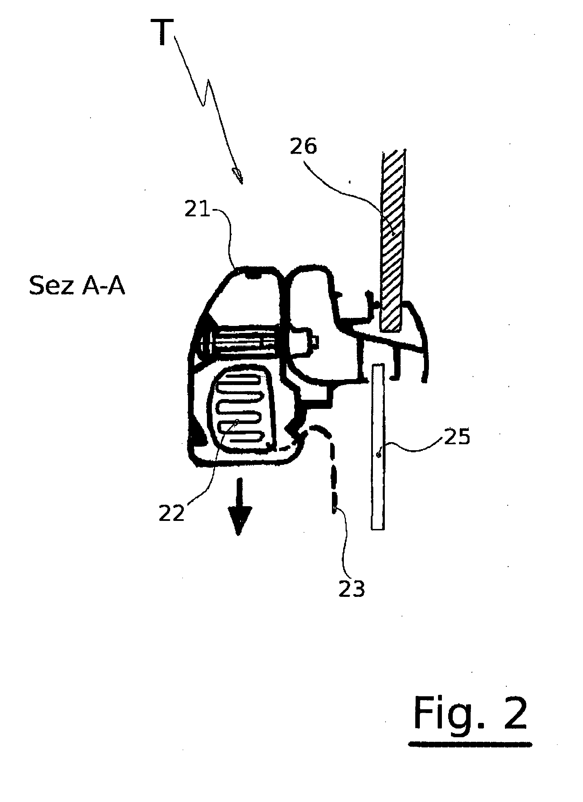

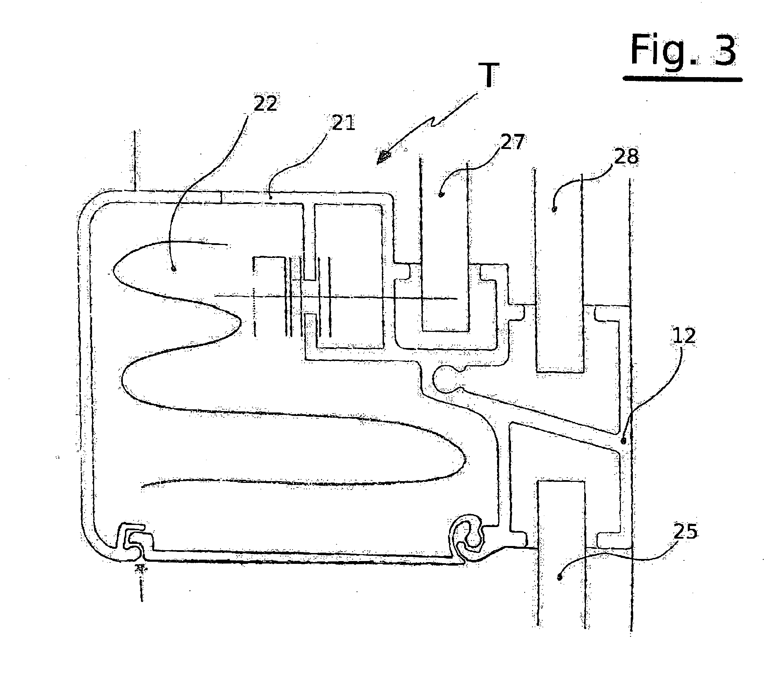

In addition, the afore said frame 21, in the preferred embodiment, acts as a frame for the window glass of the means on which the safety device T is mounted. Among the possible embodiments two forms represented in Figure 1 and 3 are mentioned, and that represented in Figure 2.

In the first embodiment the window is composed of a fixed glass, placed below the transversal additional portion 12, and a glass provided with an side-scrolling system for controlling the opening, located above the afore said transversal portion 12. Instead in the embodiment represented in Figure 2, the window is of fixed type.

In this case, the peripheral horizontal portion 15 disposed at the top of the window acts also as a housing for bag of the airbag, as well as a frame, together with the remaining peripheral portions, for the window glass itself.

The fact remains that at least some components of the airbag could be assembled also externally to the afore said frame 21.

## Claims

1. Protecting system for occupants of heavy or medium - heavy passenger transport means, comprising a frame (21) and at least one airbag, in its turn comprising at least one gas generator and / or container, at least one inflatable protecting bag (22), an electric wiring and / or connecting system with outer devices, fluidic interconnecting devices and at least one controlling system, **characterized in that** said frame (21) is able to constrain at least one glass (25) of at least one window to the corresponding opening and to house all and/or at least part of said components composing said airbag.

2. Protecting system according to the first claim, **characterized in that** said frame (21) is constrained directly to the structure of said heavy transport means.

3. Protecting system according to claim 2, **characterized in that** the afore said frame (21) is constrained directly to the structure of said heavy transport means at or in proximity of a window opening.

4. Protecting system according to any one of the preceding claims, **characterized in that** said frame (21) could be disassembled.

5. Protecting system according to any one of the preceding claims, **characterized in that** said frame (21) comprises at least one further transversal portion (12) able to house all or part of said airbag components.

6. Protecting system according to any one of the preceding claims, **characterized in that** said bag (22) and said at least one gas generator and / or container are housed in different portions of said frame.

7. Protecting system according to any one of the preceding claims, **characterized in that** said bag (22) is housed in a horizontal portion of said frame.

8. Protecting system according to claim 5, **characterized in that** the motion of said bag (22), during inflation, keeps a path directed from on high downwards.

9. Protecting system according to any one of the preceding claims, **characterized in that** the airbag is of the windowbag type.

## Patentansprüche

1. Ein Schutzsystem für Passagiere von Schwerlast- oder Mittelschwerlasttransportmitteln enthaltend einen Rahmen (21) und mindestens einen Prallsack, der wiederum mindestens einen Gasgenerator und/oder Gasbehälter aufweist, mindestens einen aufblasbaren Schutzsack (22), eine elektrische Verdrahtung und/oder ein elektrisches Verbindungssystem zu außenliegenden Vorrichtungen, strömungstechnisch miteinander verbundene Vorrichtungen und mindestens ein Steuerungssystem, **dadurch gekennzeichnet, dass** der Rahmen (21) in der Lage ist, mindestens eine Glasscheibe (25) von zumindest einem Fenster in der korrespondierenden Öffnung festzuhalten und alle und/oder zumindest einen Teil der Komponenten, aus denen sich der Prallsack zusammensetzt, aufzunehmen.

2. Das Schutzsystem gemäß dem ersten Anspruch, **dadurch gekennzeichnet, dass** der Rahmen (21) direkt an der Struktur des Schwerlasttransportmittels befestigt ist.

3. Das Schutzsystem gemäß Anspruch 2, **dadurch gekennzeichnet, dass** der zuvor erwähnte Rahmen (21) direkt an der Struktur des Schwerlasttransportmittels an oder in der Nähe einer Fensteröffnung befestigt ist.

4. Das Schutzsystem gemäß irgendeinem der vorhergehenden Ansprüche, **dadurch gekennzeichnet, dass** der Rahmen (21) auseinander genommen werden kann.

5. Das Schutzsystem gemäß irgendeinem der vorhergehenden Ansprüche, **dadurch gekennzeichnet, dass** der Rahmen (21) mindestens einen weiteren quer verlaufenden Bereich (12) aufweist, der in der Lage ist, alle oder einen Teil der Prallsackkomponenten aufzunehmen.

6. Das Schutzsystem gemäß irgendeinem der vorhergehenden Ansprüche **dadurch gekennzeichnet, dass** der Sack (22) und der mindestens eine Gasgenerator und/oder -behälter in verschiedenen Bereichen des Rahmens aufgenommen sind.

7. Das Schutzsystem gemäß irgendeinem der vorgehenden Ansprüche, **dadurch gekennzeichnet, dass** der Sack (22) in einem horizontal verlaufenden Bereich des Rahmens aufgenommen ist.

8. Das Schutzsystem gemäß Anspruch 5, **dadurch gekennzeichnet, dass** die Bewegung des Sacks (22) während des Aufblähens den Weg von oben in Richtung unten einhält.

9. Das Schutzsystem gemäß irgendeinem der vorgehendenden Ansprüche, **dadurch gekennzeichnet, dass** der Prallsack von der Art Fensterprallsack ist.

## Revendications

1. Système de protection des occupants de moyen de transport de passager lourd ou mi-lourd, comprenant une ossature (21) et au moins un coussin gonflable, comprenant quant à lui au moins un générateur et/ou contenant de gaz, au moins un coussin de protection gonflable (22), un câblage et/ou système de connexion électriques avec d'autres dispositifs, des dispositifs d'interconnexion fluidique et au moins un système de commande, **caractérisé en ce que** ladite ossature (21) est apte à limiter au moins une vitre (25) d'au moins une fenêtre à l'ouverture correspondante et loger tout et/ou au moins une partie desdits composants qui composent ledit coussin gonflable.

2. Système de protection selon la revendication 1, **caractérisé en ce que** ladite ossature (21) est limitée directement à la structure dudit moyen de transport lourd.

3. Système de protection selon la revendication 2, **caractérisé en ce que** ladite ossature (21) susmentionnée est directement limitée à la structure dudit moyen de transport lourd au niveau ou à proximité d'une ouverture de fenêtre.

4. Système de protection selon l'une quelconque des revendications précédentes, **caractérisé en ce que** ladite ossature (21) pourrait être démontée.

5. Système de protection selon l'une quelconque des revendications précédentes, **caractérisé en ce que** ladite ossature (21) comprend au moins une portion transversale supplémentaire (12) apte à loger tout ou partie desdits composants de coussin gonflable.

6. Système de protection selon l'une quelconque des revendications précédentes, **caractérisé en ce que** ledit coussin (22) et ledit au moins un générateur et/ou contenant de gaz sont logés dans différentes portions de ladite ossature.

7. Système de protection selon l'une quelconque des revendications précédentes, **caractérisé en ce que** ledit coussin (22) est logé dans une portion horizontale de ladite ossature.

8. Système de protection selon la revendication 5, **caractérisé en ce que** le mouvement dudit coussin (22), pendant le gonflage, conserve un trajet dirigé du haut vers le bas.

9. Système de protection selon l'une quelconque des revendications précédentes, **caractérisé en ce que** le coussin gonflable est de type rideau gonflable.
